# EUROPEAN PATENT SPECIFICATION

(11) **EP 2 523 107 B1**
(45) Date of publication and mention of the grant of the patent: **07.11.2018**
(21) Application number: 12163866.2
(22) Date of filing: 12.04.2012
(51) Int. Cl.: G06F 8/61

(54) **Mobile terminal and system for managing applications using the same**
Mobiles Endgerät und Verfahren zur Verwaltung von Applikationen unter Verwendung davon
Terminal mobile et système de gestion d'applications l'utilisant

(30) Priority: 19.04.2011 KR 20110036432; 06.04.2012 KR 20120036310
(43) Date of publication of application: 14.11.2012
(73) Proprietor: LG Electronics Inc., Yeongdeungpo-Gu SEOUL 07336 (KR)
(72) Inventor: Kwon, Hyukmin, Seoul (KR); Jeon, Jijong, Kyonggi-Do (KR)
(74) Representative: Cabinet Plasseraud

(56) References cited:
- EP-A1- 2 175 613
- Anonymous: "International Mobile Station Equipment Identity - Wikipedia, the free encyclopedia", , 28 November 2012 (2012-11-28), XP055286133, Retrieved from the Internet: URL:https://en.wikipedia.org/wiki/Internat ional_Mobile_Station_Equipment_Identity [retrieved on 2016-07-05]
- "Subscriber Identity Module", INTERNET CITATION, 28 November 2007 (2007-11-28), pages 1-10, XP002658200, Retrieved from the Internet: URL:http://en.wikipedia.org/wiki/Subscribe r_inentity_Module [retrieved on 2011-09-05]

## Description

### BACKGROUND OF THE INVENTION

### Field of the Invention

The present invention relates to a mobile terminal and, more particularly, to a mobile terminal capable of driving applications and a system for managing applications using the same.

### Description of the Related Art

In general, terminals may be divided into a mobile terminal and stationary terminal according to whether or not terminals are movable. In addition, mobile terminals may be divided into a handheld terminal and a vehicle mount terminal according to whether or not users can directly carry it around.

A mobile terminal may be configured to perform various functions. Examples of such functions include data and voice communication function, a function of capturing images and video through a camera, a function of storing a voice, playing music files through a speaker system, a function of displaying images or video. Some mobile terminals include additional functions which supports game playing, while other terminals are configured as multimedia players. More recently, mobile terminals have been configured to receive broadcast and multicast signals to allow for viewing of videos and television programs.

Meanwhile, mobile terminals supporting a 3^{rd}- and next generation mobile communication service may include a universal subscriber identity module (USIM) card mounted therein. The USIM card is a single card implemented by combining a subscriber identity module (SIM) card storing subscriber information and a universal IC card. Such a USIM card serves as a storage device which can store mobile communication subscriber and operator identification information, a phone number list, personal information such as transmitted and received short messages. Examples and possible embodiments are described in EP 2 175 613 A1.

### SUMMARY OF THE INVENTION

An aspect of the present invention provides a mobile terminal in which applications provided from various communication operators are mounted to be driven, and a system for managing applications using the mobile terminal.

Another aspect of the present invention provides a mobile terminal capable of enhancing user convenience in maintaining and managing applications, and a system for managing applications using the mobile terminal.

According to an aspect of the present invention, there is provided a mobile terminal according to claim 1. Possible embodiments of the invention are given by claim 2 to 8. In addition, description provide examples of mobile terminal including an identification module, a display unit, a controller, and a communication unit. The identification module may store identification information. The display unit may display a list of applications provided by a provider corresponding to the identification information. When selecting of at least one of items of the application list is recognized, the controller may generate a download request signal. The communication unit may transmit the download request signal to a relay server, and download an application corresponding to the selected item from the relay server in response to the download request signal.

Here, the identification information may include operator identification information and a manufacturer identification information. The identification module may be a global subscriber identity module (USIM) storing the operator identification information.

The communication unit may receive an update list provided by the provider corresponding to the identification information from the relay server.

The controller may determine whether or not there is an update version with respect to the application downloaded based on the update list. When the controller determines that there is an update version with respect to the downloaded application, the controller may generate an update request signal.

The communication unit may transmit the update request signal to the relay server, and download an application of an update version corresponding to the downloaded application in response to the update request signal from the relay server.

In an embodiment, the mobile terminal may further include a memory storing applications managed by the controller.

The controller may determine whether to generate the download request signal according to results obtained by comparing a size of the application corresponding to the selected item and that of a remaining storage region of the memory. When the size of the application corresponding to the selected item is greater than the size of the remaining storage region of the memory, the controller may perform an organization operation on the memory. Here, the organization operation performed on the memory may include an operation of uninstalling at least one of the applications stored in the memory.

The communication unit may receive the application list from any one of the relay server and a different relay server connected to the relay server.

According to another aspect of the present invention, there is provided an application management system according to claim 9. Possible embodiments of such application management system are given by claims 10 to 13. In addition, description provide examples of application management system that includes a mobile terminal and a relay server. The mobile terminal may display an application list provided by a provider corresponding to identification information, and when selecting of at least one of items of the application list is recognized, the mobile terminal may generate a download request signal. When the relay server receives the download request signal from the mobile terminal, the relay server may transmit an application corresponding to the selected item to the mobile terminal.

The mobile terminal may read the identification information from an internal identification module and transmit the identification information to the relay server.

In response to the identification information received from the mobile terminal, the relay server may transmit the application list to the mobile terminal. When the relay server receives an operator identification information from the mobile terminal, the relay server may transmit an operator application list to the mobile terminal, and when the relay server receives manufacturer identification information from the mobile terminal, the relay server may transmit a manufacturer application list to the mobile terminal.

in an embodiment, the application management system may further include: an operator server uploading applications corresponding to the operator identification information among the identification information to the relay server; and a manufacture server uploading applications corresponding to the manufacturer identification information among the identification information to the relay server.

In an embodiment, the application management system may further include: a different relay server storing and managing applications having a mobile platform different from that of the applications stored in and managed by the relay server.

According to another aspect of the present invention, there is provided a mobile terminal managing applications by interworking with a relay server, including: a memory unit configured to store an application in at least one type of an installation file and an execution file; a communication unit configured to transmit identification information to the relay server and download a first list of applications corresponding to the identification information from the relay server; a controller configured to generate a management list including status information regarding installation and updating of applications by using the first list and a second list of applications stored the memory unit; and a display unit configured to display the management list, wherein the memory unit includes a first memory region restricted for a user access and a second memory region allowed for a user access, the installation file is stored in at least one of the first memory region, the second memory region, and the relay server, and the execution file is stored in the second memory region.

In an embodiment, the display unit may classify the applications on the management list into an application to be installed, an installed application, and an application to be updated, and display the same on the basis of the status information. The display unit may display an indicator indicating a source of an installation file of the application to be installed on the management list. The display unit may display an icon corresponding to an application on the management list, and graphic information of the icon may be changed according to whether or not the corresponding application is installed.

In an embodiment, when the installation file of the application to be installed is not stored in the memory unit, a corresponding installation file may be downloaded from the relay server in response to an installation command with respect to the application to be installed. The controller may download an installation file of an update version from the relay server in response to an update command with respect to the application to be updated. The controller may uninstall a corresponding execution file from the second memory region in response to an uninstall command with respect to the installed application. When first booting is completed in a state in which the installation file of the application to be installed is stored in the first memory region, the controller may automatically install the application to be installed.

In an embodiment, the management list may include a plurality of category regions, and the application to be installed, the installed application, and the application to be updated may be displayed in different category regions.

In an embodiment, the execution file may be generated as a results of installation of the corresponding application by using the installation file.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below and the accompanying drawings, which are given by illustration only, and thus are not limitative of the present invention, and wherein:
FIG. 1 is a block diagram of a mobile terminal related to an embodiment of the present invention.
FIGS. 2A and 2B are perspective views showing an external appearance of the mobile terminal related to an embodiment of the present invention.
FIG. 3 is a block diagram of an application management system according to an embodiment of the present invention.
FIG. 4 is a block diagram of the mobile terminal included in the application management system illustrated in FIG. 3.
FIG. 5 is a flow chart illustrating a process of a method of managing an application of a mobile terminal according to an embodiment of the present invention.
FIGS. 6 and 7 are flow charts illustrating a process of a method of managing an application of the mobile terminal illustrated in FIG. 5 in detail.
FIG. 8 is a flow chart illustrating a method of managing an application of the mobile terminal according to another embodiment of the present invention.
FIG. 9 is a flow chart illustrating a process of a method for managing applications of a mobile terminal according to another embodiment of the present invention.
FIG. 10 is a block diagram showing an application management system according to another embodiment of the present invention.
FIGS. 11A to 11C are conceptual views showing an example of a user interface implementing an application management method according to an embodiment of the present invention.
FIGS. 12A to 12C are conceptual views showing another example of a user interface implementing an application management method according to an embodiment of the present invention.
FIG. 13 is a conceptual view showing another example of a user interface implementing an application management method according to another embodiment of the present invention.

### DETAILED DESCRIPTION OF THE INVENTION

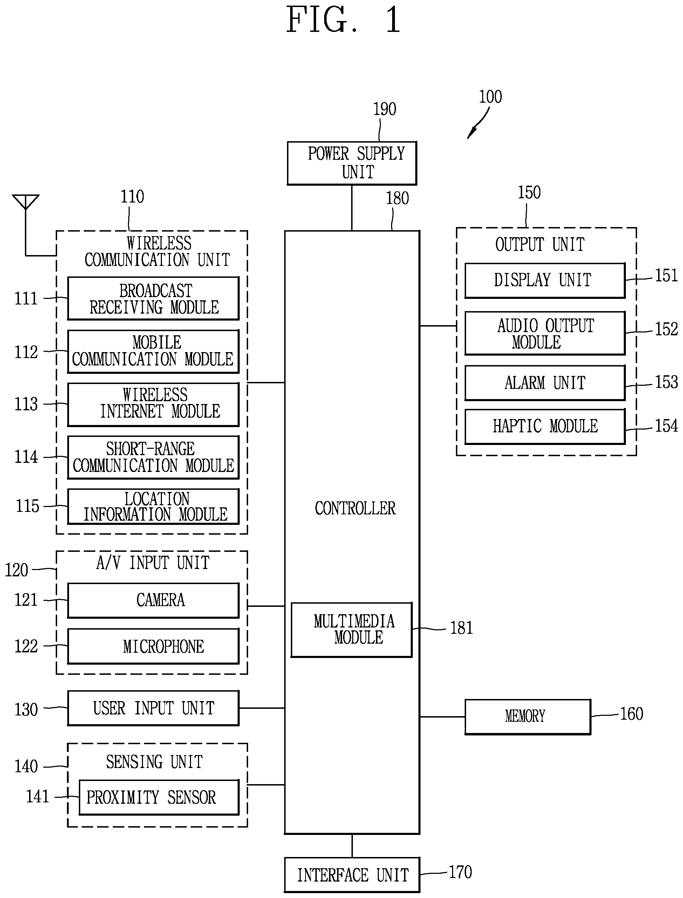

FIG. 1 is a block diagram of a mobile terminal according to an embodiment of the present invention. With reference to FIG. 1, the mobile terminal 100 may include a wireless communication unit 110, an A/V (Audio/Video) input unit 120, a user input unit 130, a sensing unit 140, an output unit 150, a memory 160, an interface unit 170, a controller 180, and a power supply unit 190, etc. FIG. 1 shows the mobile terminal as having various components, but it should be understood that implementing all of the illustrated components is not a requirement. Greater or fewer components may alternatively be implemented.

The elements 110 to 190 of the mobile terminal 100 will be described in detail as follows.

The wireless communication unit 110 typically includes one or more modules allowing for radio communication between the mobile terminal 100 and a wireless communication system or between the mobile terminal 100 and a network in which the mobile terminal is located. For example, the wireless communication unit may include at least one of a broadcast receiving module 111, a mobile communication module 112, a wireless Internet module 113, a short-range communication module 114, and a location information module 115.

The broadcast receiving module 111 receives broadcast signals and/or broadcast associated information from an external broadcast management server (or other network entity) via a broadcast channel. Here, the broadcast channel may include a satellite channel and/or a terrestrial channel. The broadcast management server may be a server that generates and transmits a broadcast signal and/or broadcast associated information or a server that receives a previously generated broadcast signal and/or broadcast associated information and transmits the same to a terminal. The broadcast signal may include a TV broadcast signal, a radio broadcast signal, a data broadcast signal, and the like. Also, the broadcast signal may further include a broadcast signal combined with a TV or radio broadcast signal.

The broadcast associated information may refer to information associated with a broadcast channel, a broadcast program or a broadcast service provider. The broadcast associated information may also be provided via a mobile communication network and, in this case, the broadcast associated information may be received by the mobile communication module 112.

The broadcast associated information may exist in various forms. For example, it may exist in the form of an electronic program guide (EPG) of digital multimedia broadcasting (DMB), electronic service guide (ESG) of digital video broadcast-handheld (DVB-H), and the like.

The broadcast receiving module 111 may receive a broadcast signal and broadcast associated information from an external broadcast management server. Here, the broadcast-associated information refers to a broadcast channel, a broadcast program, or information regarding a broadcast service provider. The broadcast associated information may also be provided through a mobile communication network. In such a case, the broadcast associated information may be received by the mobile communication module 112. Broadcast signals and/or broadcast-associated information received via the broadcast receiving module 111 may be stored in the memory 160.

The mobile communication module 112 transmits and/or receives radio signals to and/or from at least one of a base station, an external terminal, and a server. Such radio signals may include a voice call signal, a video call signal or various types of data according to text and/or multimedia message transmission and/or reception.

The wireless Internet module 113 supports wireless Internet access for the mobile terminal 100. This module may be internally or externally coupled to the mobile terminal 100. The wireless Internet access technique implemented may include a WLAN (Wireless LAN) (Wi-Fi), Wibro (Wireless broadband), Wimax (World Interoperability for Microwave Access), HSDPA (High Speed Downlink Packet Access), or the like.

The short-range communication module 114 is a module for supporting short range communications. Some examples of short-range communication technology include Bluetooth™, Radio Frequency IDentification (RFID), Infrared Data Association (IrDA), Ultra-WideBand (UWB), ZigBee™, and the like.

The location information module 115 is a module for checking or acquiring a location of the mobile terminal 100. Atypical example of the location information module is a GPS (Global Positioning System).

With reference to FIG. 1, the A/V input unit 120 is configured to receive an audio or video signal. The A/V input unit 120 may include a camera 121 and a microphone 122. The camera 121 processes image datan of still pictures or video obtained by an image capture device in a video capturing mode or an image capturing mode. The processed image frames may be displayed on a display unit 151. The image frames processed by the camera 121 may be stored in the memory 160 or transmitted to the outside via the wireless communication unit 110. Two or more cameras 121 may be provided according to a usage environment.

The microphone 122 may process an audio signal input from an external source into electrical voice data in a phone call mode, a recording mode, a voice recognition mode, and the like. The audio (voice) data processed by the microphone 122 may be converted for output into a format transmittable to a mobile communication base station via the mobile communication module 112 in case of the phone call mode. The microphone 122 may implement various types of noise canceling (or suppression) algorithms to cancel (or suppress) noise or interference generated in the course of receiving and transmitting audio signals.

The user input unit 130 may generate input data from commands entered by a user to control various operations of the mobile terminal. The user input unit 130 may include a keypad, a dome switch, a touch pad, a jog wheel, a jog switch, and the like.

The sensing unit 140 detects a current status of the mobile terminal 100 such as an opened or closed state of the mobile terminal 100, a location of the mobile terminal 100, the presence or absence of user contact with the mobile terminal 100 (i.e., touch inputs), the orientation of the mobile terminal 100, an acceleration or deceleration movement and direction of the mobile terminal 100, etc., and generates commands or signals for controlling the operation of the mobile terminal 100. For example, when the mobile terminal 100 is implemented as a slide type mobile phone, the sensing unit 140 may sense whether the slide phone is opened or closed. In addition, the sensing unit 140 can detect whether or not the power supply unit 190 supplies power or whether or not the interface unit 170 is coupled with an external device.

The sensing unit 140 may include a proximity sensor 141. Also, the sensing unit 140 may include a touch sensor (not shown) for sensing a touch operation with respect to the display unit 151.

The touch sensor may have a form of a touch film, a touch sheet, a touch pad, and the like. The touch sensor may be configured to convert pressure applied to a particular portion of the display unit 151 or a change in the capacitance or the like generated at a particular portion of the display unit 151 into an electrical input signal. The touch sensor may be configured to detect the pressure when a touch is applied, as well as the touched position and area.

When there is a touch input with respect to the touch sensor, a corresponding signal (signals) are transmitted to a touch controller. The touch controller processes the signals and transmits corresponding data to the controller 180. Accordingly, the controller 180 may recognize which portion of the display unit 151 has been touched.

When the touch screen is an electrostatic type touch screen, an approach of the pointer is detected based on a change in an electric field according to the approach of the pointer. In this case, the touch screen (touch sensor) may be classified as a proximity sensor 141.

The proximity sensor 141 is a sensor for detecting the presence or absence of an object by using the force of electromagnetism or infrared rays without a physical contact. Thus, the proximity sensor 141 has a considerably longer life span compared with a contact type sensor, and it can be utilized for various purposes. Examples of the proximity sensor 141 may include a transmission type photoelectric sensor, a direct reflection type photoelectric sensor, a mirror-reflection type photoelectric sensor, an RF oscillation type proximity sensor, a capacitance type proximity sensor, a magnetic proximity sensor, an infrared proximity sensor, and the like.

In the following description, for the sake of explanation, recognition of an object to be sensed positioned to be close to the touch screen will be called a 'proximity touch', while recognition of actual contacting of an object to be sensed on the touch screen will be called a 'contact touch'.

The proximity sensor 141 senses a proximity touch and a proximity touch pattern (e.g., a proximity touch distance, a proximity touch speed, a proximity touch time, a proximity touch position, a proximity touch movement state, or the like), and information corresponding to the detected proximity touch operation and the proximity touch pattern can be outputted to the touch screen.

The output unit 150 is configured to provide outputs in a visual, audible, and/or tactile manner (e.g., audio signal, video signal, alarm signal, vibration signal, etc.). The output unit 150 may include the display unit 151, an audio output module 152, an alarm unit 153, a haptic module 154, and the like.

The display unit 151 may display (output) information processed in the mobile terminal 100. For example, when the mobile terminal 100 is in a phone call mode, the display unit 151 may display a User Interface (UI) or a Graphic User Interface (GUI) associated with a call or other communication (such as text messaging, multimedia file downloading, etc.). When the mobile terminal 100 is in a video call mode or image capturing mode, the display unit 151 may display a captured image and/or received image, a Ul or GUI that shows videos or images and functions related thereto, and the like.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, and an e-ink display.

Some of them may be configured to be transparent or light-transmissive to allow viewing of the exterior, which may be called transparent displays. A typical transparent display may be, for example, a TOLED (Transparent Organic Light Emitting Diode) display, or the like. Through such configuration, the user can view an object positioned at the rear side of the terminal body through the region occupied by the display unit 151 of the terminal body.

The mobile terminal 100 may include two or more display units (or other display means) according to its particular desired embodiment. For example, a plurality of display units may be separately or integrally disposed on one surface of the mobile terminal, or may be separately disposed on mutually different surfaces.

The audio output module 152 may convert and output as sound audio data received from the wireless communication unit 110 or stored in the memory 160 in a call signal reception mode, a call mode, a record mode, a voice recognition mode, a broadcast reception mode, and the like. Also, the audio output module 152 may provide audible outputs related to a particular function performed by the mobile terminal 100 (e.g., a call signal reception sound, a message reception sound, etc.). The audio output module 152 may include a speaker, a buzzer, or other sound generating device.

The alarm unit 153 may provide outputs to inform about the occurrence of an event of the mobile terminal 100. Typical events may include call reception, message reception, key signal inputs, a touch input etc. In addition to audio or video outputs, the alarm unit 153 may provide outputs in a different manner to inform about the occurrence of an event. For example, the alarm unit 153 may provide an output in the form of vibrations. A video signal or an audio signal may also be output through the display unit 151 or the audio output module 152, so the display unit 151 and the audio output module 152 may be classified as a part of the alarm unit 153.

The haptic module 154 generates various tactile effects the user may feel. A typical example of the tactile effects generated by the haptic module 154 is vibration. The strength and pattern of the haptic module 154 can be controlled. For example, different vibrations may be combined to be outputted or sequentially outputted.

Besides vibration, the haptic module 154 may generate various other tactile effects such as an effect by stimulation such as a pin arrangement vertically moving with respect to a contact skin, a spray force or suction force of air through a jet orifice or a suction opening, a contact on the skin, a contact of an electrode, electrostatic force, etc., an effect by reproducing the sense of cold and warmth using an element that can absorb or generate heat.

The haptic module 154 may be implemented to allow the user to feel a tactile effect through a muscle sensation such as fingers or arm of the user, as well as transferring the tactile effect through a direct contact. Two or more haptic modules 154 may be provided according to the configuration of the mobile terminal 100.

The memory 160 may store software programs used for the processing and controlling operations performed by the controller 180, or may temporarily store data (e.g., a phonebook, messages, still images, video, etc.) that are inputted or outputted. In addition, the memory 160 may store data regarding various patterns of vibrations and audio signals outputted when a touch is inputted to the touch screen.

The memory 160 may include at least one type of storage medium including a Flash memory, a hard disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 160 over the Internet.

The interface unit 170 serves as an interface with every external device connected with the mobile terminal 100. For example, the external devices may transmit data to an external device, receives and transmits power to each element of the mobile terminal 100, or transmits internal datan of the mobile terminal 100 to an external device. For example, the interface unit 170 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating the authority of using the mobile terminal 100 and may include a user identity module (UIM), a subscriber identity module (SIM) a universal subscriber identity module (USIM), and the like. In addition, the device having the identification module (referred to as 'identifying device', hereinafter) may take the form of a smart card. Accordingly, the identifying device may be connected with the terminal 100 via a port.

When the mobile terminal 100 is connected with an external cradle, the interface unit 170 may serve as a passage to allow power from the cradle to be supplied therethrough to the mobile terminal 100 or may serve as a passage to allow various command signals inputted by the user from the cradle to be transferred to the mobile terminal therethrough. Various command signals or power inputted from the cradle may operate as signals for recognizing that the mobile terminal is properly mounted on the cradle.

The controller 180 typically controls the general operations of the mobile terminal. For example, the controller 180 performs controlling and processing associated with voice calls, data communications, video calls, and the like. The controller 180 may include a multimedia module 181 for reproducing multimedia data. The multimedia module 181 may be configured within the controller 180 or may be configured to be separated from the controller 180. The controller 180 may perform a pattern recognition processing to recognize a handwriting input or a picture drawing input performed on the touch screen as characters or images, respectively.

The power supply unit 190 receives external power or internal power and supplies appropriate power required for operating respective elements and components under the control of the controller 180.

Various embodiments described herein may be implemented in a computer-readable or its similar medium using, for example, software, hardware, or any combination thereof.

For hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein. In some cases, such embodiments may be implemented by the controller 180 itself.

For software implementation, the embodiments such as procedures or functions described herein may be implemented by separate software modules. Each software module may perform one or more functions or operations described herein. Software codes can be implemented by a software application written in any suitable programming language. The software codes may be stored in the memory 160 and executed by the controller 180.

Hereinafter, a method of processing a user input with respect to the mobile terminal 100 will be described.

The user input units 130 is manipulated to receive a command for controlling the operation of the mobile terminal 100 and may include a plurality of manipulation units. The manipulation units may be generally referred to as a manipulating portion, and various methods and techniques can be employed for the manipulation portion so long as they can be operated by the user in a tactile manner.

Various types of visual information may be displayed on the display unit 151. The information may be displayed in the form of character, number, symbol, graphic, icon, etc. In order to input the information, at least one of the character, number, symbol, graphic and icon is displayed in a certain arrangement so as to be implemented in the form of a keypad. Such keypad may be so-called 'soft key'.

The display unit 151 may be operated as a whole region or may be divided into a plurality of regions and accordingly operated. In the latter case, the plurality of regions may be operation in association with each other. For example, an output window and an input window may be displayed at upper and lower portions of the display unit 151, respectively. The output window and the input window are regions allotted for outputting or inputting information, respectively. Soft keys including numbers for inputting a phone number, or the like, may be outputted to the input window. When the soft key is touched, a number corresponding to the touched soft key is displayed on the output window. When the manipulation unit is manipulated, a call connection with respect to a phone number displayed on the output window is attempted, or text displayed on the output window may be input to an application.

The display unit 151 or the touch pad may be configured to sense touch scrolling. The user may move a cursor or a pointer positioned on an entity, e.g., an icon or the like, displayed on the display unit 151 by scrolling the display unit 151 or the touch pad. In addition, when the user moves his fingers on the display unit 151 or the touch pad, a path along which the user's fingers move may be visually displayed on the display unit 151. This would be useful in editing an image displayed on the display unit 151.

One function of the terminal may be executed in case where the display unit 151 and the touch pad are touched together within a certain time range. The both touches may be clamping the terminal body with the user's thumb and index finger. The one function executed in this case may be, for example, activation or deactivation of the display unit 151 or the touch pad.

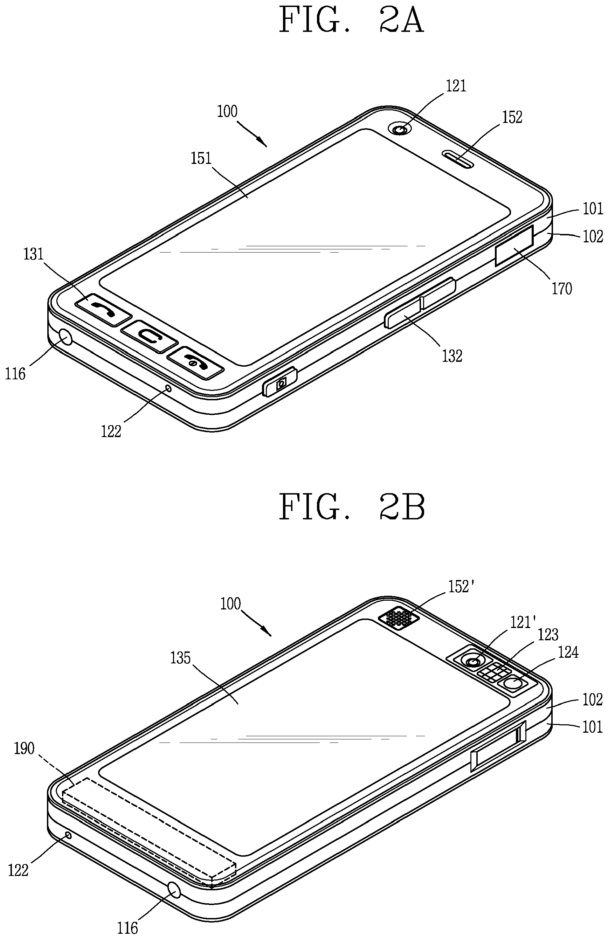

FIGS. 2A and 2B are perspective views showing an external appearance of the mobile terminal 100 according to an embodiment of the present invention. Specifically, FIG. 2A shows a front surface and one lateral surface of the mobile terminal 100, and FIG. 2B shows a rear surface and another lateral surface of the mobile terminal 100.

With reference to FIG. 2A, the mobile terminal 200 has a bar type terminal body. However, without being limited thereto, the present invention may also be applicable to a slide type mobile terminal, a folder type mobile terminal, a swing type mobile terminal, a swivel type mobile terminal, and the like, in which two or more bodies are coupled to be movable relatively.

The terminal body includes a case (or casing, housing, cover, etc.) constituting an external appearance of the terminal body. The case may be divided into a front case 101 and a rear case 102. Various electronic components are installed in the space between the front case 101 and the rear case 102. One or more intermediate cases may be additionally disposed between the front case 101 and the rear case 102.

The cases may be formed by injection-molding a synthetic resin or may be made of a metallic material such as stainless steel (STS) or titanium (Ti), etc.

The display unit 151, the audio output module 152, the camera 121, and the user input unit 130 (see FIG. 1), the microphone 122, the interface 170, and the like, may be located on the terminal body, namely, mainly, on the front case 101.

The display unit 151 occupies the most portion of the front surface of the front case 101. The audio output module 152 and the camera 121 are disposed at a region adjacent to one end portion of the display unit 151, and a first user input unit 131 and the microphone 122 are disposed at a region adjacent to the other end portion of the display unit 151. A second user input unit 132 and the interface 170 may be disposed on the sides of the front case 101 and the rear case 102.

The user input unit 130 is manipulated to receive commands for controlling the operation of the mobile terminal 200, and may include a plurality of manipulation units 131 and 132.

The manipulation units 231 and 232 may be generally called a manipulating portion, and they can employ any method so long as they can be manipulated in a tactile manner by the user.

The first or second manipulation unit 131 or 132 may receive various commands. For example, the first manipulation unit may receive commands such as start, end, scroll, or the like, and the second manipulation unit 132 may receive commands such as adjustment of size of a sound outputted from the audio output module 152, conversion to a touch recognition mode of the display unit 151, and the like.

With reference to FIG. 2B, a rear camera 121' may additionally be disposed on a rear surface of the terminal body, namely, on the rear case 102. The camera 121' may have an image capture direction which is substantially opposite to that of the camera 121 (See FIG. 2A), and may support a different number of pixels (i.e., have a different resolution) than the front camera 121.

For example, the front camera 121 may have a relatively small number of pixels, and the rear camera 121' may have a relatively large number of pixels. Thus, the use of the front camera 121 for a video call can reduce the size of transmission data in case of capturing the user's face and transmitting the captured image to a counterpart in real time. Meanwhile, the rear camera 121' may be used for the purpose of storing a high quality image.

Meanwhile, the cameras 121 and 121' may be installed on the terminal such that they are rotated or popped up.

A flash 123 and a mirror 124 may be additionally disposed adjacent to the camera 121'. When the user captures an image of the subject with the rear camera 121', the flash 123 illuminates the subject. The mirror 124 allows the user to see himself when he wants to capture his own image (i.e., self-image capturing) by using the rear camera 121'.

An audio output unit 152' may be additionally disposed on the rear surface of the terminal body. The rear audio output unit 152' may implement a stereoscopic function along with the audio output module 152 (See FIG. 2A), and may be used for implementing a speaker phone mode during call communication.

A broadcast signal receiving antenna 116 may be additionally disposed on the side of the terminal body in addition to an antenna that supports call communications. The antenna 116 forming a portion of the broadcast reception module 111 (See FIG. 1) may be installed to be drawn out of the terminal body.

A power supply unit 190 for supplying power to the mobile terminal 100 may be mounted on the terminal body. The power supply unit 190 may be installed in the terminal body or may be directly detached from the outside of the terminal body.

A touch pad 135 for detecting a touch may be additionally mounted on the rear case 102. Such touch pad may be configured to be light-transmissive like the display unit 151 (See FIG. 2A). Also, a rear display unit may be additionally mounted on the touch pad 135 in order to output visual information. In this case, information output from both of the front display unit 151 and the rear display unit may be controlled by the touch pad 135.

The touch pad 135 is operated in relation to the display unit 151. The touch pad 135 may be disposed to be parallel to the rear side of the display unit 151. The touch pad 135 may have the same size as or smaller than the display unit 151.

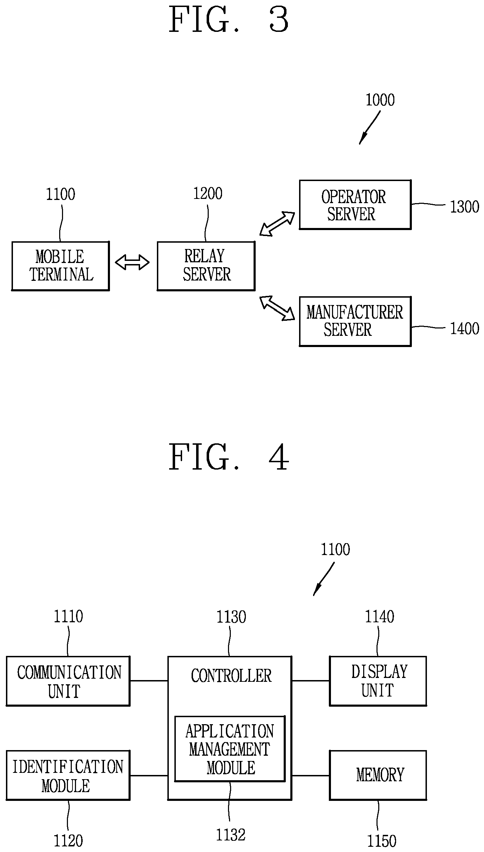

FIG. 3 is a block diagram of an application management system 1000 according to an embodiment of the present invention.

With reference to FIG. 3, the application management system 100 includes a mobile terminal 1100, a relay server 1200, an operator server 1300, and a manufacturer server 1400.

The mobile terminal 1100 accesses the relay server 1200 through a fixed line or wirelessly to receive information regarding operator applications and manufacturer applications, e.g., an application list. Here, the operator application refers to an application provided by a mobile communication operator that installs and operates communication facilities, and the manufacture application refers to an application provided by a manufacturer that manufactures terminals. The mobile terminal 1100 downloads operator applications and manufacturer applications by using the application list received from the relay server 1200.

The mobile terminal1100 may include an application management module for managing a configuration such as installing, uninstalling, downloading, updating, or the like, with respect to the operator applications and the manufacturer applications. The application management module may be mounted in the form of software such as firmware in the terminal during a fabrication process, or may be mounted in the form of hardware such as system on chip (SoC) in the terminal.

Also, the application management module may be implemented as a single application. In this case, like other applications, the application management module may also be downloaded from the relay server 1200 so as to be mounted in the terminal.

The relay server 1200 stores the operator applications uploaded from the operator server 1300 and the manufacturer applications uploaded from the manufacturer server 1400, and manages the same.

In response to a request for information from the mobile terminal 1100, the relay server 1200 transmits an application information, e.g., an application list, an update list, and the like, to the mobile terminal 1100. In this case, the request for information from the mobile terminal 1100 may include operator identification information, manufacturer identification information, and the like.

In response to a download request or an update request from the mobile terminal 1100, the relay server 1200 transmits applications corresponding to identification information to the mobile terminal 1100. For example, the relay server 1200 may transmit operator applications provided by an operator corresponding to the operator identification information to the mobile terminal 1100 and manufacturer applications provided by a manufacturer corresponding to the manufacturer identification information to the mobile terminal 1100.

The relay server 1200 may serve as a mobile content market that sells various applications.

The operator server 1300 uploads operator applications developed and managed by a mobile communication operator in order to provide them to the user. The manufacturer server 1400 uploads manufacturer applications developed and managed by a terminal manufacturer to the relay server 1200 in order to provide them to the user.

FIG. 4 is a block diagram of the mobile terminal 1100 included in the application management system illustrated in FIG. 3.

With reference to FIG. 4, the mobile terminal 1100 includes a communication unit 1110, an identification module 1120, a control unit 1130, a display unit 1140, and a memory 1150.

The communication unit 1110 accesses a relay server through a fixed line or wirelessly to transmit and receive data to and from the relay server. The communication unit 1110 transmits identification information read from the identification module 1120 to the relay server and receives an application list (download list) and an update list provided by a provider corresponding to the identification information from the relay server.

The communication unit 1110 transmits a request signal generated by the control unit 1130 to the relay server, and downloads an application corresponding to the request signal from the relay server in response to the request signal. In detail, when the communication unit 1110 transmits a download request signal to the relay server, it may download a corresponding application from the relay server. Also, when the communication unit 1110 transmits an update request signal to the relay server, it may download an application of a corresponding update version from the relay server.

The identification module 1120 stores information for authenticating authority for use of the mobile terminal 1100, e.g., subscriber identification information, operator identification information, manufacturer identification information, and the like. Here, the manufacturer identification information, e.g., a name of a company, a serial number of a product, a production date of a product, and the like, may be information stored in an internal storage region of the mobile terminal 1100. This means that the manufacturer identification information may be copied from the internal storage region to the identification module 1120 and stored.

The identification module 1120 may be implemented in the form of a USIM card. Also, the identification module 1120 may be implemented as a large capacity memory device capable of storing an application corresponding to identification information, as well as the identification information.

The control unit 1130 controls a general operation of the mobile terminal 1100. The control unit 1130 includes an application management module 1132 for managing applications mounted in the mobile terminal 1110.

The application management module 1132 manages installation, uninstallation, downloading, updating, and the like, of applications. Applications managed by the application management module 1132 includes an application stored in the memory 1150 and an application stored in the relay server. Also, such applications may be configured as at least one type of an installation file and an execution file. Here, the installation file refers to source data for installing an application, and the execution file refers to result data generated as results of installation of an application.

When selecting of at least one of items of an application list received by the communication unit 1110 is recognized, the application management module 1132 generates a download request signal and transfers the generated download request signal to the communication unit 1110. When an application is downloaded from the relay server in response to the download request signal, the application management module 1132 may generate a management list and register information regarding the downloaded application to the management list in order to manage the same. Also, the application management module 1132 may generate a management list including status information regarding installation and updating of applications by using applications stored in the relay server, e.g., a list of applications corresponding to identification information and a list of applications stored in the memory 1150.

The application management module 1132 may determine whether or not there is an update version with respect to an application on the management list on the basis of an update list received by the communication unit 1110. When the application management module 1132 determines that there is an update version with respect to the application, the application management module 1132 generates an update request signal and transfers the generated update request signal to the communication unit 1110. When an application of an update version is downloaded from the relay server in response to the update request signal, the application management module 1132 registers corresponding information to the management list to update the management list.

The application management module 1132 may compare a size of an application (referred to as a 'selected application', hereinafter) corresponding to a selected item of the management list and a size of a remaining storage region, and determine whether to generate a download request signal according to the comparison results.

For example, when the size of the selected application is greater than the size of the remaining storage region of the memory 1150, namely, when a spare storage space for downloading the selected application is insufficient, the application management module 1132 may an organization operation on the memory 1150, instead of generating a download request signal. Here, the organization operation performed on the memory 1150 may be an operation of uninstalling at least one of applications stored in the memory 1150. Also, the organization operation performed on the memory 1150 may be an operation of uninstalling garbage data, a temporary file, and the like.

When the size of the selected application is equal to or smaller than the remaining storage region of the memory 1150, namely, when a spare storage space is sufficient for downloading the selected application, the application management module 1132 may generate a download request signal or an update request signal and transfer the same to the communication unit 1110.

The display unit 1140 displays a management list in response to controlling of the application management module 1132. For example, the display unit 1140 may display an application list and an update list provided by a provider corresponding to identification information. The display unit 1140 may be implemented in the form of a touch screen for sensing selecting with respect to an item in the management list.

The memory 1150 stores applications managed by the application management module 1132. Namely, the memory 1150 may store the application downloaded from the relay server and the update version thereof. Also, the memory 1150 may store manufacture identification information.

The memory 1150 may include a first memory region restricted for a user access and a second memory region allowed for a user access. The first memory region may also be called a system memory region, and storing, uninstalling, and correcting of data according to a user input is limited in the system memory region unless an operating system (OS) gives authority to access to the user. Meanwhile, the second memory region may also be called a user memory region, and storing, uninstalling, correcting of data is allowed in the user memory region.

As described above, according to an embodiment of the present invention, when a mobile terminal is released, an operator application may be downloaded to the mobile terminal by using the application management module. Namely, in the process of fabricating the mobile terminal, the application management module for integratedly managing applications is mounted in the mobile terminal, and applications provided by a provider corresponding to identification information, especially, applications provided by an operator corresponding to user identification information may be downloaded from the relay server by using the application management module.

Thus, in the process of fabricating the mobile terminal, there is no need to wait until an operator application is released in order to mount the operator application in the mobile terminal, and as a result, a development schedule can be simplified.

Hereinafter, a method of managing (e.g., installing, uninstalling, downloading, updating, etc.) various types of applications by the application management module 1132 according to an embodiment of the present invention will be described.

Applications managed by the application management module 1132, namely, applications on the management list may be classified into an application to be installed, an installed application, and an application to be updated. Each of the applications may be implemented as at least one type of an installation file and an execution file.

An application implemented as an installation file before an execution file is generated may be defined as an application to be installed. Here, the installation file of the application to be installed may be stored in at least one of the first memory region, the second memory region, and the relay server. This means that source data for installing an application can be provided from the memory 1150 or the relay server. When the installation file is stored in the relay server, rather than in the memory 1150, the application management module 1132 may download the installation file from the relay server in response to an installation command.

When an installation operation by using the installation file is completed, an execution file is generated, and an application implemented as the execution file may be defined as an installed application. Here, the execution file of the installed application may be stored in the first or second memory region. When the execution file is stored in the first memory region, uninstalling and updating of the installed application is limited. Meanwhile, when the execution file is stored in the second memory region, uninstalling and updating of the installed application is allowed. Thus, the application management module 1132 may uninstall the execution file of the application installed in the second memory region in response to an uninstallation command.

When there is an update version with respect to the installed application, the application of the previous version may be defined to be an application to be updated. The application management module 1132 may download an installation file of the update version from the relay server in response to an update command.

The installation file downloaded from the relay server in response to the installation command or update command may be stored in the second memory region. This means that the user can access data downloaded from the relay server.

In a state in which the installation file of the application to be installed is stored in the first memory region, when a factory reset is performed on the mobile terminal 100 and then first booting of mobile terminal 100 is completed, the application management module 1132 may be automatically install an application to be installed. Here, the factory reset refers to restoration of the mobile terminal 100 into a state of being released from the factory. Thus, when the mobile terminal 100 is factory-reset, data stored in the user memory region, namely, in the second memory region after the factory reset may be all uninstalled. Also, in a similar case, the application management module 1132 may manually install the application to be installed in response to an installation command from the user.

As described above, according to an embodiment of present invention, types of the applications managed by the application management module may be variably discriminated and various management methods are provided, thereby enhancing user convenience in managing the configuration with respect to the applications.

Also, an application is implemented to be divided into an installation file and an execution file, and the execution file of the application is stored in the user memory region, rather than in the system memory region, thereby reducing a load of the system memory region.

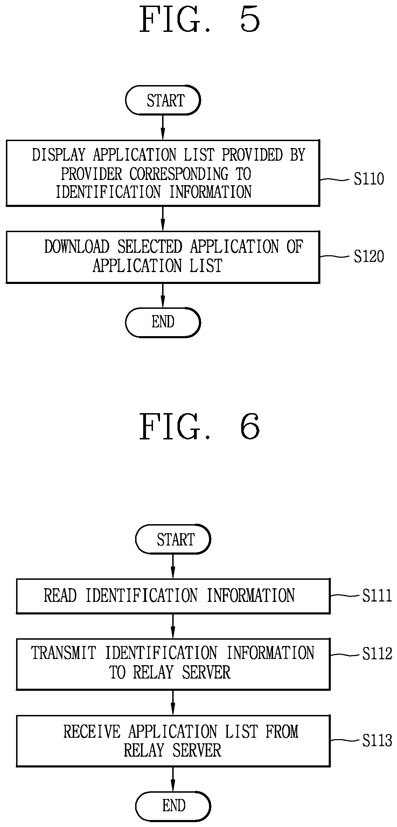

FIG. 5 is a flow chart illustrating a process of a method of managing an application of a mobile terminal according to an embodiment of the present invention.

With reference to FIG. 5, a method of managing an application of a mobile terminal according to an embodiment of the present invention includes a step (S110) of displaying an application list provided by a provider corresponding to identification information. For example, when an application list provided by an operator corresponding to user identification information is received by the communication unit, the display unit may display a list including items with respect to provider applications. In another example, when an application list provided by a manufacturer corresponding to manufacturer identification information is received by the communication unit, the display unit may display a list including items with respect to manufacturer applications. The step (S110) of displaying the application list may be described in detail with reference to FIG. 5.

When selecting of at least one of items of the application list is recognized, a step (S120) of downloading the selected application is performed. The step (S120) of downloading the application may be described in detail with reference to FIG. 6, hereafter.

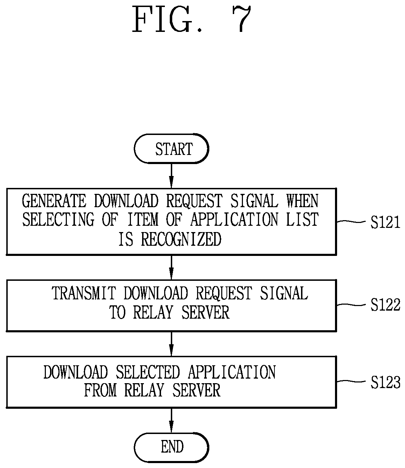

FIGS. 6 and 7 are flow charts illustrating a process of a method of managing an application of the mobile terminal illustrated in FIG. 5 in detail.

With reference to FIG. 6, the step (S110) of displaying the application list includes a step (S111) of reading identification information from the identification module. Here, as mentioned above, the identification information may include user identification information and manufacturer identification information. In this case, any one of the user identification information and the manufacturer identification information may be selected according to a user input.

Next, a step (S112) of transmitting identification information to the relay server is performed. Thereafter, a step (S113) of receiving the application list provided by the provider corresponding to the identification information from the relay server is performed in response to the identification information. At this time, the display unit may display the application list received from the relay server.

With reference to FIG. 7, the step (S120) of downloading the application illustrated in FIG. 5 includes a step (S121) of generating a download request signal when selecting of at least one of the items of the application list is recognized.

When the download request signal is generated, a step (S122) of transmitting the download request signal to the relay server is performed. Next, in response to the download request signal, a step (S123) of downloading the selected application from the relay server is performed. The downloaded application may be stored in at least one of the identification module and the memory.

As described above, according to an embodiment of the present invention, applications can be selectively downloaded, so a usage amount of the internal memory of the mobile terminal can be reduced.

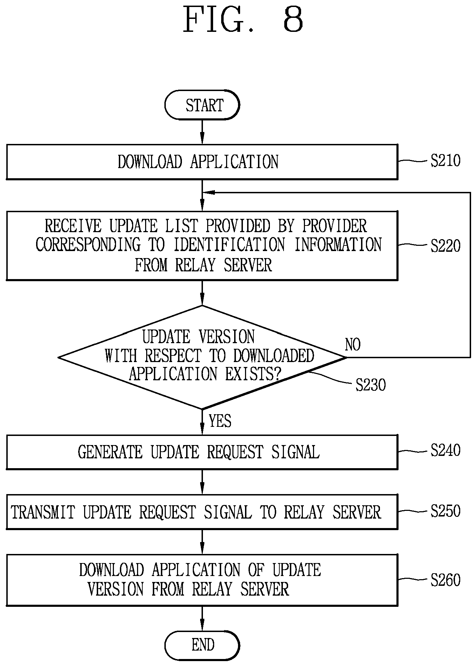

FIG. 8 is a flow chart illustrating a method of managing an application of a mobile terminal according to another embodiment of the present invention.

With reference to FIG. 8, the method of managing an application of a mobile terminal according to another embodiment of the present invention may include steps (S220 to S260) of performing updating on an application. To this end, first, a step (S210) of downloading an application may be first performed.

A step of performing updating may include a step (S220) of receiving an update list provided by a provider corresponding to identification information from the relay server. When the update list is received, a step (S230) of determining whether or not an update version with respect to the application downloaded based on the update list is performed.

When there is no update version, the step (S220) of receiving the update list may be repeatedly performed. When there is an update version, a step (S240) of generating an update request signal is performed.

When the update request signal is generated, a step (S250) of transmitting the update request signal to the relay server is performed. Next, in response to the update request signal, a step (S260) of downloading an application of an update version with respect to the downloaded application from the relay server is performed. The downloaded application of update version may be stored in at least one of the identification module and the memory.

As described above, according to an embodiment of the present invention, update information provided by a mobile communication operator or manufacturer is received from the server, and applications of update version can be downloaded by using the received update information, so user convenience in managing a configuration of applications can be enhanced.

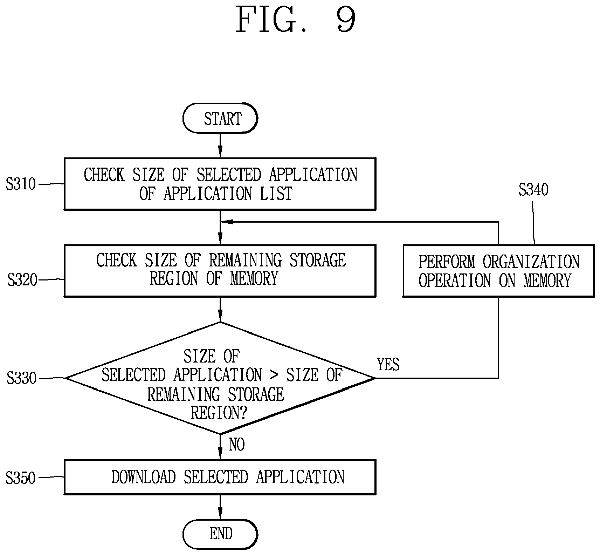

FIG. 9 is a flow chart illustrating a process of a method of managing an application of a mobile terminal according to another embodiment of the present invention.

With reference to FIG. 9, the method of managing an application of a mobile terminal according to another embodiment of the present invention is related to a step of downloading an application. The step of downloading an application according to another embodiment of the present invention includes a step (S310) of checking the size of a selected application of an application list and a step (S320) of checking the size of a remaining storage region of the memory.

Next, according to comparison results obtained by comparing the size of the selected application (download subject application) and the size of a remaining storage region of the memory, a step (S330) of determining whether to download the selected application is performed.

When the size of the selected application is greater than that of the remaining storage region of the memory, a step (S340) of performing an organization operation on the memory is performed. Here, at least one of applications stored in the memory may be uninstalled. Also, threshold data, temporary files, and the like, stored in the memory may be uninstalled. Through such an organization operation on the memory, a spare space for storing the selected application may be secured.

When the size of the selected application is equal to or smaller than that of the remaining storage region of the memory, a step (S350) of downloading the selected application is performed. The downloaded application may be stored in the memory.

In a modification of the present invention, whether to download the selected application may be determined according to results obtained by comparing the size of the selected application and that of the remaining storage region of the identification module. In this case, the downloaded application may be stored in the identification module.

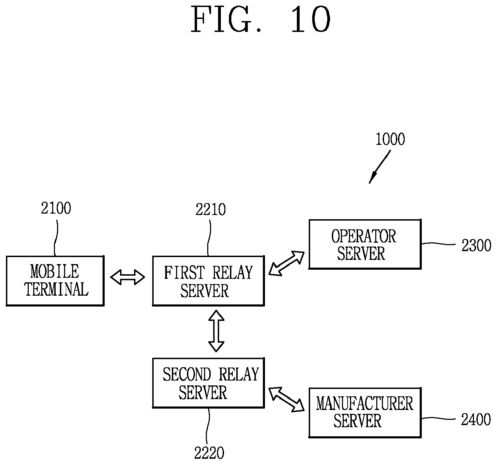

FIG. 10 is a block diagram showing an application management system according to another embodiment of the present invention.

With reference to FIG. 10, an application management system 2000 includes a mobile terminal 2100, first and second relay servers 2210 and 2220, an operator server 2300, and a manufacturer server 2400. Namely, the application management system 2000 may include a plurality of relay servers 2210 and 2220. Hereinafter, a repeated description with the application management system 1000 illustrated in FIG. 3 will be omitted.

The first relay server 2210 is connected to the second relay server 2210, and relays between the mobile terminal 2100 and the second relay server 2220. This means that although the mobile terminal 2100 is connected to the first relay server 2210, the mobile terminal 2100 may be connected to the second relay server 2220 through the first relay server 2210.

The first and second relay servers 2210 and 2220 may store and manage applications having different mobile platforms. For example, the first relay server 2210 may store and manage applications based on Android, and the second relay server 2220 may store and manage applications based on IOS, Symbian, or the like.

Although it is illustrated that the first relay server 2210 is connected to the operator server 2300 and the second relay server 2220 is connected to the manufacturer server 2400, the application management system 2000 may be variably implemented without being limited thereto.

For example, both the operator server 2300 and the manufacturer server 2400 may be connected to the first relay server 2210 or the second relay server 2220. In another example, the first relay server 2210 and the manufacturer server 2400 may be connected, and the second relay server 2220 and the operator server 2300 may be connected.

In either case, the mobile terminal 2100 may be connected to any one of the first and second relay servers 2210 and 2220 to download operator applications and manufacturer applications. Here, the mobile terminal 2100 may be connected to the relay server that stores and manages applications corresponding to mobile platforms mounted therein.

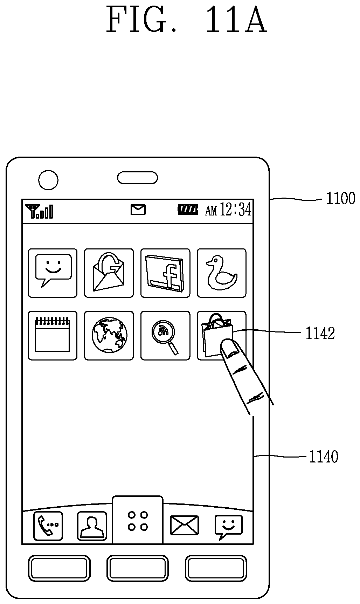

FIGS. 11A to 11C are conceptual views showing an example of a user interface implementing an application management method according to an embodiment of the present invention.

With reference to FIG. 11A, a display unit 1140 may execute an execution menu 1142 for executing an application management module mounted in the mobile terminal 1100. When a touch input with respect to the execution menu 1142 is sensed, the application management module may be executed.

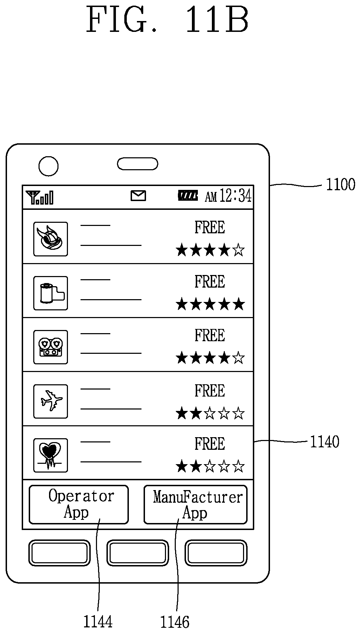

With reference to FIG. 11B, when the application management module is executed, the display unit 1140 may display an application list. Also, the display unit 1140 may display a first menu 1144 for displaying an operator application list and a second menu 1146 for displaying a manufacturer application list.

When a touch input with respect to the first menu 1144 is sensed, the mobile terminal 1100 transmits operator identification information to the relay server, and receives an operator application list in response thereto. When the operator application list is received, the display unit 1140 displays a provider application list.

When a touch input with respect to the second menu 1146 is sensed, the mobile terminal 1100 transmits manufacturer identification information to the relay server and receives a manufacturer application list from the relay server in response thereto. When the provider application list is received, the display unit 1140 displays an operator application list.

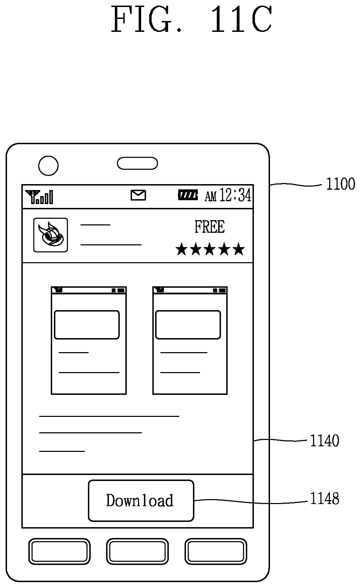

With reference to FIG. 11C, when selecting of any one of items of an application list is sensed, the display unit 1140 may display detailed information regarding the selected application. In this case, the display unit 1140 may display a download menu 1148 for downloading the selected application.

When a touch input with respect to the download menu 1148 is sensed, the mobile terminal 1100 transmits a download request signal to the relay server and downloads the selected application in response thereto.

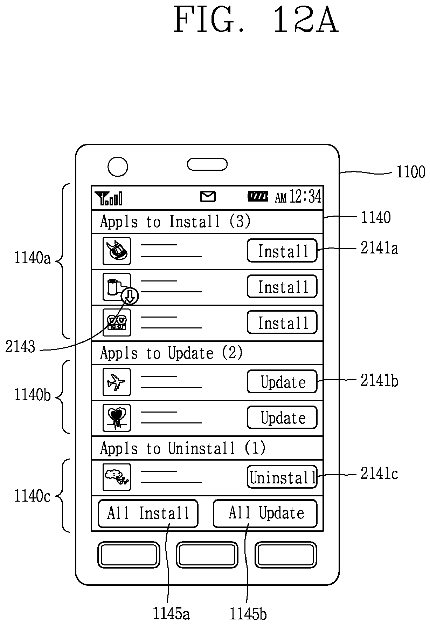

FIGS. 12A to 12C are conceptual views showing another example of a user interface implementing an application management method according to an embodiment of the present invention.

With reference to FIG. 12A, when the application management module is executed, the display unit 1140 may display a management list. As described above, the management list may include a list of applications provided from the relay server and the memory.

The display unit 1140 may classify the applications of the management list into an application to be installed, an installed application, and an application to be updated and display them on the basis of application status information. To this end, the display unit 1140 may display menu buttons 2141a, 2141b, and 2141c indicating respective states of the applications of the management list and executing relevant functions. For example, the menu buttons 2141a, 2141b, and 2141c may include a first menu button 2141a corresponding to an application to be installed, a second menu button 2141b corresponding to an installed application, and a third menu button 2141c corresponding to an application to be updated.

In response to selecting of the first menu button 2141a, the application management module recognizes an installation command and install an application corresponding to the first menu button 2141a. In response to selecting of the second menu button 2141b, the application management module may recognize an uninstallation command and uninstall an application corresponding to the second menu button 2141b. In response to selecting of the third menu button 2141c, the application management module may recognize an update command and update an application corresponding to the third menu button 2141c.

In order to discriminate the application to be installed, the installed application, and the application to be update from each other, the management list may include a plurality of category regions 1140a, 1140b, and 1140c. Application to be installed may be displayed in the first category region 1140a, installed applications may be disposed in the second category region 1140b, and applications to be updated may be disposed in the third category region 1140c.

The display unit 1140 may display an indicator 2143 indicating a source of an installation file of the application to be installed on the management list. For example, when the indicator 2143 is displayed on the application to be installed on the management file, it means that the installation file of the application to be installed is provided form the relay server. Meanwhile, when the indicator 2143 is not displayed on the application to be installed, the installation file of the application to be installed is provided from the memory.

The display unit 1140 may display an all installation button and all update button 1145b. In response to selecting of the all installation button 1145a, the application management module may install all of the applications to be installed on the management list. Also, in response to selecting of the all update button 1145b, the application management module may update all of the applications to be updated on the management list at a time.

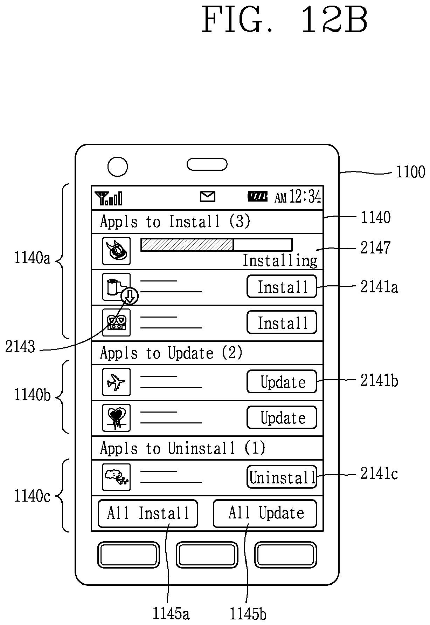

While a particular application is being installed, the display unit 1140 may display information 2147 indicating installation progress as shown in FIG. 12B. Also, the display unit 1140 may display information indicating update progress while a particular application is being updated in a similar manner.

When an application is installed, updated, or uninstalled, the state of the application is c hanged. For example, when an installation operation performed on an application to be installed is completed, the application to be installed is changed into an installed application or an application to be updated. Also, when an updating operation performed on an application to be updated is completed, the application to be updated is changed into an installed application. Also, when an uninstalling operation performed on an installed application is completed, the installed application is changed into an application to be installed.

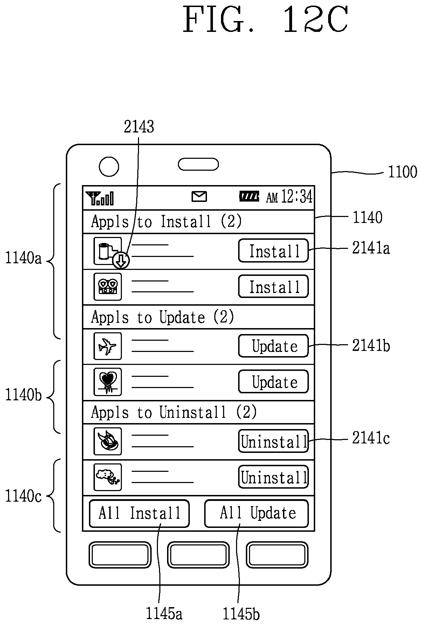

With reference to FIGS. 12A and 12C, the application changed in state according to the change in the application state may be relocated in a category region corresponding to the changed state. For example, when any one of applications to be installed is installed, the corresponding application may be shifted from the first category region 1140a to the third category region 1140c.

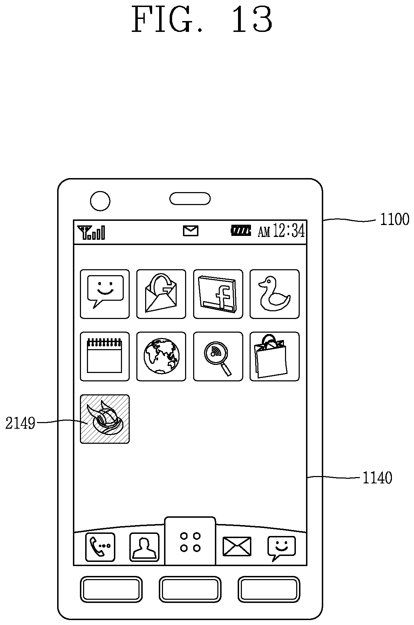

FIG. 13 is a conceptual view showing another example of a user interface implementing an application management method according to another embodiment of the present invention.

With reference to FIG. 13, the display unit 1140 may display icons corresponding to applications of the management list on a screen (e.g., a home screen, an idle screen, or the like) different from the execution screen of the application management module. In this case, graphic information of icons (e.g., color, shape, size, brightness, density, tilt, 3D depth value, and the like) may be changed according to whether or not a corresponding application is installed. For example, as illustrated, the icon 2149 of an application to be installed may be displayed to be shaded. In this case, an installation file of the application to be installed may have been already stored in the memory.

When a touch input with respect to the icon 2149 of the application to be installed is sensed, the application to be installed may be installed by using the installation file stored in the memory. When the application to be installed is installed, the corresponding icon 2149 may be displayed to be clear. Accordingly, the user can easily recognize an installation state of each of the applications on the management list without having to execute the application management module.

As the exemplary embodiments may be implemented in several forms without departing from the characteristics thereof, it should also be understood that the above-described embodiments are not limited by any of the details of the foregoing description, unless otherwise specified, but rather should be construed broadly within its scope as defined in the appended claims. Therefore, various changes and modifications that fall within the scope of the claims, or equivalents of such scope are therefore intended to be embraced by the appended claims.

## Claims

1. A mobile terminal (100, 1100) comprising:
an identification module (1120) configured to store identification information, wherein the identification information comprises identification information of a mobile communication operator and identification information of a manufacturer of the mobile terminal;
a display unit (1140) configured to display (S110) a list of applications provided by a provider, wherein the provider is the mobile communication operator or the manufacturer, corresponding to the identification information;
a controller (1130) configured to generate (S121) a download request signal when selecting of at least one of items of the application list is recognized;
a memory (1150) storing applications managed by the controller (1130), and divided into first and second memory regions, wherein the first region is restricted for user access and the second region allows user access; and
a communication unit (1110) configured to transmit (S122) the download request signal to a relay server (1200), and download (S120, S123) an application corresponding to the selected item from the relay server (1200) in response to the download request signal;
**characterized in that** the application to be installed is divided into an installation file and an execution file and the execution file is stored in the second memory region and the installation file is stored in the first memory region, wherein the installation file refers to source data for installing the application, and the execution file refers to result data generated as result of the installation of the application.

2. The mobile terminal (100, 1100) of claim 1, wherein the communication unit (1110) receives (S220) an update list provided by the provider corresponding to the identification information from the relay server.

3. The mobile terminal (100, 1100) of claim 2, wherein the controller (1130) determines (S230) whether or not there is an update version with respect to the application downloaded based on the update list.

4. The mobile terminal (100, 1100) of claim 1, wherein the controller (1130) determines (S310) whether to generate (S240) the download request signal according to results obtained by comparing a size of the application corresponding to the selected item and that of a remaining storage region of the memory (1150).

5. The mobile terminal (100, 1100) of claim 1, wherein when (S330) the size of the application corresponding to the selected item is greater than the size of the remaining storage region of the memory (1150), the controller performs (S350) an organization operation on the memory (1150).

6. The mobile terminal (100, 1100) of claim 1, wherein the communication unit receives the application list from any one of the relay server (2210) and a different relay server (2220) connected to the relay server (2210).

7. The mobile terminal (100, 1100) of claim 1, further configured such that:
the communication unit (1110) transmits the identification information to the relay server (2210) and downloads a first list of applications corresponding to the identification information from the relay server (2210),
the controller (1130) generates a management list including status information regarding installation and updating of applications by using the first list and a second list of applications stored in the memory (1150), and
the display unit (1140) displays the management list.

8. The mobile terminal (100, 1100) of claim 7, wherein the display unit classifies the applications on the management list into an application to be installed, an installed application, and an application to be updated, and displays the same on the basis of the status information.

9. An application management system comprising:
a mobile terminal (100, 1100) according to claim 1 and
a relay server (2210) configured to transmit an application corresponding to the selected item to the mobile terminal (100, 1100), when the download request signal is received from the mobile terminal (100, 1100).

10. The application management system of claim 9, wherein the mobile terminal (100, 1100) reads the identification information from the identification module (1120) and transmits the identification information to the relay server (2210).

11. The application management system of claim 10, wherein, in response to the identification information received from the mobile terminal (100, 1100), the relay server (2210) transmits the application list to the mobile terminal (100, 1100).

12. The application management system of claim 9, further comprising:
an operator server (1300) configured to upload applications corresponding to the operator identification information among the identification information to the relay server (2210); and
a manufacturer server (1400) configured to upload applications corresponding to the manufacturer identification information among the identification information to the relay server (2210).

13. The application management system of claim 9, further comprising:
a different relay server storing and managing applications having a mobile platform different from that of the applications stored in and managed by the relay server (2210).

## Patentansprüche

1. Mobiles Endgerät (100, 1100), mit:
einem Identifizierungsmodul (1120), das dafür konfiguriert ist, Identifizierungsinformation zu speichern, wobei die Identifizierungsinformation Identifizierungsinformation eines Mobilkommunikationsbetreibers und Identifizierungsinformation eines Herstellers des mobilen Endgeräts enthält;
einer Anzeigeeinheit (1140), die dafür konfiguriert ist, eine Liste von Anwendungen anzuzeigen (S110), die durch einen Provider bereitgestellt werden, wobei der Provider der Mobilkommunikationsbetreiber oder der Hersteller ist, der der Identifizierungsinformation entspricht;
einer Steuereinheit (1130), die dafür konfiguriert ist, ein Download-Anforderungssignal zu erzeugen (S121), wenn die Auswahl mindestens eines von Elementen der Anwendungsliste erkannt wird;
einem Speicher (1150), der durch die Steuereinheit (1130) gemanagte Anwendungen speichert und in einen ersten und einen zweiten Speicherbereich geteilt ist, wobei ein Benutzerzugriff auf den ersten Bereich eingeschränkt ist und ein Benutzerzugriff auf den zweiten Bereich zugelassen ist; und
einer Kommunikationseinheit (1110), die dafür konfiguriert ist, das Download-Anforderungssignal an einen Relaisserver (1200) zu übertragen (S122) und in Antwort auf das Download-Anforderungssignal eine dem ausgewählten Element entsprechende Anwendung vom Relaisserver (1200) herunterzuladen (S120, S123);
**dadurch gekennzeichnet, dass**
die zu installierende Anwendung in eine Installationsdatei und eine Ausführungsdatei geteilt ist und die Ausführungsdatei im zweiten Speicherbereich gespeichert ist und die Installationsdatei im ersten Speicherbereich gespeichert ist, wobei die Installationsdatei auf Quelldaten zum Installieren der Anwendung Bezug nimmt und die Ausführungsdatei auf Ergebnisdaten Bezug nimmt, die als Ergebnis der Installation der Anwendung erzeugt werden.

2. Mobiles Endgerät (100, 1100) nach Anspruch 1, wobei die Kommunikationseinheit (1110) eine Update-Liste, die durch den Provider bereitgestellt wird, der der Identifizierungsinformation entspricht, vom Relaisserver empfängt (S220).

3. Mobiles Endgerät (100, 1100) nach Anspruch 2, wobei die Steuereinheit (1130) basierend auf der Update-Liste bestimmt (S230), ob eine Update-Version für die heruntergeladene Anwendung vorliegt oder nicht.

4. Mobiles Endgerät (100, 1100) nach Anspruch 1, wobei die Steuereinheit (1130) gemäß Ergebnissen, die durch Vergleichen einer Größe der Anwendung, die dem ausgewählten Element entspricht, und der Größe eines verbleibenden Speicherbereichs des Speichers (1150) erhalten werden, bestimmt (S310), ob das Download-Anforderungssignal erzeugt werden soll (S240).

5. Mobiles Endgerät (100, 1100) nach Anspruch 1, wobei, wenn (S330) die Größe der Anwendung, die dem ausgewählten Element entspricht, größer ist als die Größe des verbleibenden Speicherbereichs des Speichers (1150), die Steuereinheit eine Organisationsverarbeitung bezüglich des Speichers (1150) ausführt (S350).

6. Mobiles Endgerät (100, 1100) nach Anspruch 1, wobei die Kommunikationseinheit die Anwendungsliste von irgendeinem unter dem Relaisservers (2210) und einem anderen Relaisserver (2220) empfängt, der mit dem Relaisserver (2210) verbunden ist.

7. Mobiles Endgerät (100, 1100) nach Anspruch 1, wobei das mobile Endgerät ferner derart konfiguriert ist, dass:
die Kommunikationseinheit (1110) die Identifizierungsinformation an den Relaisserver (2210) überträgt und eine erste Liste von Anwendungen, die der Identifizierungsinformation entsprechen, vom Relaisserver (2210) herunterlädt;
die Steuereinheit (1130) eine Managementliste, die Statusinformation bezüglich einer Installation und eines Updates von Anwendungen enthält, unter Verwendung der ersten Liste und einer zweiten Liste von Anwendungen erzeugt, die im Speicher (1150) gespeichert sind; und
die Anzeigeeinheit (1140) die Managementliste anzeigt.

8. Mobiles Endgerät (100, 1100) nach Anspruch 7, wobei die Anzeigeeinheit die Anwendungen in der Managementliste auf der Basis der Statusinformation in eine zu installierende Anwendung, eine installierte Anwendung und eine upzudatende Anwendung klassifiziert und diese anzeigt.

9. Anwendungsmanagementsystem mit:
einem mobilen Endgerät (100, 1100) nach Anspruch 1; und
einem Relaisserver (2210), der dafür konfiguriert ist, eine Anwendung, die dem ausgewählten Element entspricht, an das mobile Endgerät (100, 1100) zu übertragen, wenn das Download-Anforderungssignal vom mobilen Endgerät (100, 1100) empfangen wird.

10. Anwendungsmanagementsystem nach Anspruch 9, wobei das mobile Endgerät (100, 1100) die Identifizierungsinformation vom Identifizierungsmodul (1120) liest und die Identifizierungsinformation an den Relaisserver (2210) überträgt.

11. Anwendungsmanagementsystem nach Anspruch 10, wobei der Relaisserver (2210) in Antwort auf die vom mobilen Endgerät (100, 1100) empfangene Identifizierungsinformation die Anwendungsliste an das mobile Endgerät (100, 1100) überträgt.

12. Anwendungsmanagementsystem nach Anspruch 9, ferner mit:
einem Betreiberserver (1300), der dafür konfiguriert ist, Anwendungen, die der Betreiberidentifizierungsinformation unter der Identifizierungsinformation entsprechen, zum Relaisserver (2210) hochzuladen; und
einem Herstellerserver (1400), der dafür konfiguriert ist, Anwendungen, die der Herstelleridentifizierungsinformation unter der Identifizierungsinformation entsprechen, zum Relaisserver (2210) hochzuladen.

13. Anwendungsmanagementsystem nach Anspruch 9, ferner mit:
einem anderen Relaisserver, der Anwendungen speichert und managt, die eine mobile Plattform aufweisen, die sich von derjenigen der Anwendungen unterscheidet, die im Relaisserver (2210) gespeichert sind und durch diesen gemanagt werden.

## Revendications

1. Terminal mobile (100, 1100) comprenant :
un module d'identification (1120) configuré pour stocker des informations d'identification, dans lequel les informations d'identification comprennent des informations d'identification d'un opérateur de communication mobile et des informations d'identification d'un fabricant du terminal mobile ;
une unité d'affichage (1140) configurée pour afficher (S110) une liste d'applications fournies par un fournisseur, dans lequel le fournisseur est l'opérateur de communication mobile ou le fabricant, correspondant aux informations d'identification ;
un dispositif de commande (1130) configuré pour générer (S121) un signal de demande de téléchargement lorsque la sélection d'au moins l'un d'éléments de la liste d'applications est reconnue ;
une mémoire (1150) stockant des applications gérée par le dispositif de commande (1130), et divisée en première et seconde régions de mémoire, dans lequel la première région est restreinte en termes d'accès utilisateur et la seconde région permet un accès utilisateur ; et
une unité de communication (1110) configurée pour transmettre (S122) le signal de demande de téléchargement à un serveur relais (1200), et télécharger (S120, S123) une application correspondant à l'élément sélectionné à partir du serveur relais (1200) en réponse au signal de demande de téléchargement ;
**caractérisé en ce que** l'application à installer est divisée en un fichier d'installation et un fichier d'exécution et le fichier d'exécution est stocké dans la seconde région de mémoire et le fichier d'installation est stocké dans la première région de mémoire, dans lequel le fichier d'installation concerne des données sources pour installer l'application, et le fichier d'exécution concerne des données de résultat générées en tant que résultat de l'installation de l'application.

2. Terminal mobile (100, 1100) selon la revendication 1, dans lequel l'unité de communication (1110) reçoit (S220) une liste de mises à jour fournie par le fournisseur correspondant aux informations d'identification du serveur relais.

3. Terminal mobile (100, 1100) selon la revendication 2, dans lequel le dispositif de commande (1130) détermine (S230) s'il y a une version de mise à jour ou non par rapport à l'application téléchargée d'après la liste de mises à jour.

4. Terminal mobile (100, 1100) selon la revendication 1, dans lequel le dispositif de commande (1130) détermine (S310) s'il faut générer (S240) le signal de demande de téléchargement selon des résultats obtenus en comparant une taille de l'application correspondant à l'élément sélectionné et celle d'une région de stockage restante de la mémoire (1150).

5. Terminal mobile (100, 1100) selon la revendication 1, dans lequel lorsque (S330) la taille de l'application correspondant à l'élément sélectionné est supérieure à la taille de la région de stockage restante de la mémoire (1150), le dispositif de commande réalise (S350) une opération d'organisation sur la mémoire (1150).

6. Terminal mobile (100, 1100) selon la revendication 1, dans lequel l'unité de communication reçoit la liste d'applications en provenance de l'un quelconque du serveur relais (2210) et d'un serveur relais différent (2220) connecté au serveur relais (2210).

7. Terminal mobile (100, 1100) selon la revendication 1, configuré en outre pour que :
l'unité de communication (1110) transmet les informations d'identification au serveur relais (2210) et télécharge une première liste d'applications correspondant aux informations d'identification à partir du serveur relais (2210),
le dispositif de commande (1130) génère une liste de gestion incluant des informations de statut concernant l'installation et la mise à jour d'applications en utilisant la première liste et la seconde liste d'applications stockées dans la mémoire (1150), et
l'unité d'affichage (1140) affiche la liste de gestion.

8. Terminal mobile (100, 1100) selon la revendication 7, dans lequel l'unité d'affichage classe les applications sur la liste de gestion en une application à installer, une application installée, et une application à mettre à jour, et affiche celles-ci sur la base des informations de statut.

9. Système de gestion d'applications comprenant :
un terminal mobile (100, 1100) selon la revendication 1, et
un serveur relais (2210) configuré pour transmettre une application correspondant à l'élément sélectionné au terminal mobile (100, 1100), lorsque le signal de demande de téléchargement est reçu en provenance du terminal mobile (100, 1100).

10. Système de gestion d'applications selon la revendication 9, dans lequel le terminal mobile (100, 1100) lit les informations d'identification du module d'identification (1120) et transmet les informations d'identification au serveur relais (2210).

11. Système de gestion d'applications selon la revendication 10, dans lequel, en réponse aux informations d'identification reçues en provenance du terminal mobile (100, 1100), le serveur relais (2210) transmet la liste d'applications au terminal mobile (100, 1100).

12. Système de gestion d'applications selon la revendication 9, comprenant en outre :
un serveur d'opérateur (1300) configuré pour téléverser des applications correspondant aux informations d'identification d'opérateur parmi les informations d'identification au serveur relais (2210) ; et
un serveur de fabricant (1400) configuré pour téléverser des applications correspondant aux informations d'identification de fabricant parmi les informations d'identification au serveur relais (2210).

13. Système de gestion d'applications selon la revendication 9, comprenant en outre :
un serveur relais différent stockant et gérant des applications ayant une plateforme mobile différente de celle des applications stockées dans le serveur relais (2210) et gérées par celui-ci.
